# EUROPEAN PATENT APPLICATION

(11) **EP 2 263 902 A2**
(43) Date of publication of application: **22.12.2010**
(21) Application number: 10165337.6
(22) Date of filing: 09.06.2010
(51) Int. Cl.: B60K 11/04

(54) **Support structure for cooling unit for vehicle**

(30) Priority: 10.06.2009 JP 2009139671
(71) Applicant: Toyoda Iron Works Co., Ltd., Toyota-shi Aichi 471-8507 (JP)
(72) Inventor: Yokoi, Kazuhiko, Toyota-shi Aichi 471-8507 (JP); Kosaka, Hiroyasu, Toyota-shi Aichi 471-8507 (JP)
(74) Representative: TBK-Patent

(57) **Abstract**

It is provided a support structure for a cooling unit (10) for a vehicle, in which in one straight side edge portion of a rectangular cooling unit, a first support point (60, 78) and a second support point (66, 84), which are set to be away from each other in a longitudinal direction of the one side edge portion, are supported by a first retention portion (54, 72) and a second retention portion (56, 74), respectively, the first retention portion and the second retention portion being provided in a single support bracket (34, 36, 70, 90) fixed integrally to a vehicle body, the second retention portion (56, 74) supporting the second support point (66, 84) through a fragile portion (62, 80) that is broken to permit the second support point to be separated from the second retention portion when an external force equal to or larger than a predetermined value is applied to the second support point in a direction toward a rear side of a vehicle; and when the fragile portion (56, 74) is broken, the second support point being permitted to move toward the rear side of the vehicle, and to pivot in a direction of an arc with a center at the first support point.

## Description

### INCORPORATION BY REFERENCE

The disclosure of Japanese Patent Application No. 2009-139671 filed on June 10, 2009 including the specification, drawings and abstract is incorporated herein by reference in its entirety.

### BACKGROUND OF THE INVENTION

### 1. Field of the Invention

The invention relates to a support structure for a cooling unit for a vehicle, and in particular to improvement of a support structure in which one straight side edge portion of a rectangular cooling unit is supported at two points that are away from each other in a longitudinal direction, and the cooling unit is permitted to be displaced toward a rear side of a vehicle when a predetermined external force is applied in a direction toward the rear side of the vehicle.

### 2. Description of the Related Art

There is known a support structure for a cooling unit for a vehicle, in which in one straight side edge portion of a rectangular cooling unit, a first support point and a second support point, which are set to be away from each other in a longitudinal direction of the one side edge portion, are supported by a vehicle body-side fixation portion through a first retention portion and a second retention portion, respectively. An example is a device described in FIG. 13 and FIG. 14 of Japanese Patent Application Publication No. 2006-256461 (JP-A-2006-256461) or a device described in FIG. 1 to FIG. 8 of Japanese Patent Application Publication No. 2008-132960 (JP-A-2008-132960). In each of the devices described in the publications, when a predetermined external force is applied in a direction toward a rear side of a vehicle at a time of front collision or the like, the first support point and the second support point are moved toward the rear side of the vehicle while guided by respective elongate holes. Thus, damage to the cooling unit is suppressed. In Japanese Patent Application Publication No. 2006-256461, the vehicle body-side fixation portion is configured using a single support bracket. Paired elongate holes, which serve as the first retention portion and the second retention portion, are formed in the support bracket. In addition, fragile portions are provided in the elongate holes, and the fragile portions are broken when the external force equal to or larger than a predetermined value is applied.

However, in the conventional support structures, because both of the first support point and the second support point are moved toward the rear side of the vehicle while guided by the elongate holes, when an unbalanced load is applied to the cooling unit due to offset collision or the like, the cooling unit may be twisted and the cooling unit may not be smoothly moved, and as a result, an excessively large load may be applied to the cooling unit and the cooling unit may be damaged.

### SUMMARY OF THE INVENTION

The invention has been made under such circumstances, and an object of the invention is to make it possible to smoothly move a cooling unit toward a rear side of a vehicle even when an unbalanced load is applied to the cooling unit, thereby suppressing damage to the cooling unit more appropriately.

The object indicated above may be achieved according to a first aspect of the invention, which provides a support structure for a cooling unit for a vehicle, in which in one straight side edge portion of a rectangular cooling unit, a first support point and a second support point, which are set to be away from each other in a longitudinal direction of the one side edge portion, are supported by a first retention portion and a second retention portion, respectively, the first retention portion and the second retention portion being provided in a single support bracket fixed integrally to a vehicle body, (a) the second retention portion supporting the second support point through a fragile portion that is broken to permit the second support point to be separated from the second retention portion when an external force equal to or larger than a predetermined value is applied to the second support point in a direction toward a rear side of a vehicle; and (b) when the fragile portion is broken, the second support point being permitted to move toward the rear side of the vehicle, and to pivot in a direction of an arc with a center at the first support point.

The object indicated above may be achieved according to a second aspect of the invention, which provides the support structure for a cooling unit for a vehicle according to the first aspect of the invention, wherein (a) the paired support brackets are provided on both sides of the cooling unit in a width direction of the vehicle, and each of the paired support brackets supports a corresponding one of the paired side edge portions that are disposed at right and left side portions of the cooling unit to extend in a top-bottom direction, through the first retention portion and the second retention portion; and (b) the second retention portion includes a connection portion that protrudes upward or downward through the fragile portion, and that is connected to the second support point to support the second support point.

The object indicated above may be achieved according to a third aspect of the invention, which provides the support structure for a cooling unit for a vehicle according to the first or second aspect of the invention, wherein the support bracket includes a stopper portion that engages with the second support point that has been separated from the second retention portion due to breakage of the fragile portion, thereby restricting the second support point from moving toward the rear side of the vehicle by an amount equal to or larger than a predetermined amount.

The object indicated above may be achieved according to a fourth aspect of the invention, which provides the support structure for a cooling unit for a vehicle according to any one of the first to third aspects of the invention, wherein the first retention portion includes a slide mechanism that permits the first support point to linearly move only toward the rear side of the vehicle when the external force equal to or larger than a predetermined value is applied to the first support point in the direction toward the rear side of the vehicle.

The object indicated above may be achieved according to a fifth aspect of the invention, which provides the support structure for a cooling unit for a vehicle according to the fourth aspect of the invention, wherein in the second retention portion, breaking strength of the fragile portion is set so that when the external force is applied in the direction toward the rear side of the vehicle, the second support point is permitted to move toward the rear side of the vehicle before the first support point supported by the first retention portion starts to move.

The object indicated above may be achieved according to a sixth aspect of the invention, which provides the support structure for a cooling unit for a vehicle according to any one of the first to third aspects of the invention, wherein (a) the first support point is supported by the first retention portion so that the first support point is unable to move toward the rear side of the vehicle; and (b) when the external force equal to or larger than the predetermined value is applied and the fragile portion is broken, the second support point is caused to pivot toward the rear side of the vehicle along an arc with the center at the first support point.

According to the first aspect of the invention, the second retention portion supports the second support point through a fragile portion that is broken to permit the second support point to be separated from the second retention portion when an external force equal to or larger than a predetermined value is applied to the second support point in a direction toward a rear side of a vehicle; and when the fragile portion is broken, the second support point is permitted to move toward the rear side of the vehicle, and to pivot in a direction of the arc with a center at the first support point. Consequently, when the external force equal to or larger than the predetermined value is applied, the degree of freedom of movement of the second support point is high. For example, when the first support point is permitted to linearly move only toward the rear side of the vehicle by a slide mechanism as in the fifth aspect of the invention, the cooling unit is permitted to move in a substantially parallel manner toward the rear side of the vehicle while the second support point is moved toward the rear side of the vehicle together with the first support point. In addition, the cooling unit is also permitted to move toward the rear side of the vehicle while oscillating in such a manner that the second support point is caused to pivot in the direction of the arc with the center at the first support point. When the first support point is supported by the first retention portion so that the first support point is unable to move toward the rear side of the vehicle as in the sixth aspect of the invention, only the second support point can be moved, and therefore, the cooling unit is moved (caused to pivot) toward the rear side of the vehicle while the second support point is constantly stably caused to pivot toward the rear side of the vehicle along the arc with the center at the first support point.

Thus, the degree of freedom of movement of the second support point is high as described above, and the second support point can be displaced toward the rear side of the vehicle in different manners according to, for example, the manner in which the first support point is supported, and the manner in which the external force is applied. Therefore, even when an unbalanced load is applied to the cooling unit, the cooling unit is not likely to be twisted, and thus, the cooling unit is smoothly moved toward the rear side of the vehicle. Accordingly, damage to the cooling unit is appropriately suppressed. Particularly, when a fragile portion is broken, the second support point is separated from the second retention portion. Therefore, in this state, the cooling unit is supported only by the first retention portion through the first support point. Thus, the cooling unit is moved or caused to pivot toward the rear side of the vehicle smoothly, without being restricted by the second retention portion. In addition, as compared to when the second support point is slid in an elongate hole against the fastening torque (friction force) of the bolt or the like, variation in a breaking load at which the fragile portion is broken is small, and thus, the fragile portion is constantly broken by a certain external force reliably, and as a result, the second support point is separated from the second retention portion and the cooling unit is reliably moved toward the rear side of the vehicle. Also, the cooling unit is supported at the two support points, that is, the first support point and the second support point in one side edge portion, which are away from each other in a longitudinal direction. Therefore, in a normal state in which a large external force is not applied, it is possible to stably maintain the cooling unit in a certain posture, according to the support strength thereof.

According to the second aspect of the invention, the paired support brackets are provided on both sides of the cooling unit in a width direction of the vehicle, and each of the paired support brackets supports a corresponding one of the paired side edge portions that are disposed at right and left side portions of the cooling unit to extend in a top-bottom direction, through the first retention portion and the second retention portion. Consequently, it is possible to stably maintain the cooling unit in a certain posture at a predetermined position. In addition, it is possible to permit the cooling unit to move or pivot toward the rear side of the vehicle at a time of front collision or the like, thereby appropriately suppressing damage to the cooling unit. And the second retention portion includes a connection portion that protrudes upward or downward through the fragile portion, and that is connected to the second support point to support the second support point. Consequently, a force in a tensile direction or a compression direction is applied to the fragile portion due to the load of the cooling unit. Therefore, the cooling unit is appropriately supported with predetermined support strength in spite of existence of the fragile portion. On the other hand, when the external force is applied in a direction toward the rear side of the vehicle, that is, in a direction substantially perpendicular to a direction in which the connection portion protrudes, a force in a shear direction is applied to the fragile portion, and the fragile portion is broken relatively easily. Thus, while sufficient strength is ensured, the fragile portion is reliably broken to permit the cooling unit to move toward the rear side of the vehicle at the time of vehicle collision or the like.

According to the third aspect of the invention, the support bracket includes a stopper portion that engages with the second support point that has been separated from the second retention portion due to breakage of the fragile portion, thereby restricting the second support point from moving toward the rear side of the vehicle by an amount equal to or larger than a predetermined amount. Consequently, in spite of the separation of the second support point from the second retention portion, the cooling unit is maintained in a predetermined posture, and thus, the cooling unit is moved or caused to pivot toward the rear side of the vehicle stably. In addition, it is possible to avoid damage to the cooling unit due to, for example, contact between the cooling unit and the other member in the vicinity of the cooling unit.

According to the fifth aspect of the invention, in the second retention portion, breaking strength of the fragile portion is set so that when the external force is applied in the direction toward the rear side of the vehicle, the second support point is permitted to move toward the rear side of the vehicle before the first support point supported by the first retention portion starts to move. Consequently, the external force is concentrated on a portion of the first retention portion, which supports the first support point, due to breakage of the fragile portion, and thus, the first support point is moved toward the rear side of the vehicle. When the first support point is linearly moved only toward the rear side of the vehicle by the slide mechanism, the second support point is moved toward the rear side of the vehicle, while pivoting around the first support point. Thus, the cooling unit is smoothly moved toward the rear side of the vehicle.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIGS. 1A to 1C are diagrams showing a support structure for a cooling unit for a vehicle according to a first embodiment of the invention, FIG. 1A is a schematic perspective view, FIG. 1B is a side view of the support structure at a left side of a vehicle, which is seen from the left side of the vehicle, and FIG. 1C is a plan view showing the support structure at the left side of the vehicle, which is seen from a top of the vehicle;
FIGS. 2A and 2B are sectional views showing an enlarged IIA-IIA section and an enlarged IIB-IIB section in FIG. 1B;
FIG. 3 is a perspective view showing only a support bracket at the left side in the first embodiment shown in FIGS. 1A to 1C;
FIG. 4 is a diagram explaining action when a fragile portion of a second retention portion in the support bracket shown in FIG. 3 is broken, and a second support point is separated from the second retention portion;
FIG. 5 is a diagram, which is a side view corresponding to FIG. 1B, for showing a state in which the cooling unit has been displaced toward a rear side of a vehicle in the first embodiment shown in FIGS. 1A to 1C;
FIG 6 is a diagram, which is a side view corresponding to FIG. 1B, for explaining a support structure for a cooling unit for a vehicle according to a second embodiment,
FIGS. 7A and 7B are sectional views showing an enlarged VIIA-VIIA section and an enlarged VIIB-VIIB section in FIG. 6;
FIG. 8 is a perspective view showing only a support bracket at a left side in the second embodiment shown in FIG. 6;
FIG 9 is a diagram explaining action when a fragile portion of a second retention portion in the support bracket shown in FIG. 8 is broken, and a second support point is separated from the second retention portion;
FIG. 10 is a diagram, which is a side view corresponding to FIG. 6, for showing a state in which a cooling unit has been displaced toward a rear side of a vehicle in the second embodiment shown in FIG. 6;
FIG. 11 is a diagram, which is a side view corresponding to FIG. 1B, for explaining a support structure for a cooling unit for a vehicle according to a third embodiment;
FIGS. 12A and 12B are sectional views showing an enlarged XIIA-XIIA section and an enlarged XIIB-XIIB section; in FIG. 11;
FIG. 13 is a perspective view showing only a support bracket at a left side in the third embodiment shown in FIG. 11; and
FIG. 14 is a diagram, which is a side view corresponding to FIG. 11, for showing a state in which a cooling unit has been displaced toward a rear side of a vehicle in the third embodiment shown in FIG. 11.

### DETAILED DESCRIPTION OF EMBODIMENTS

A cooling unit for a vehicle, to which a support structure according to the invention is applied, is, for example, a radiator that cools a cooling fluid for cooling an engine. However, the support structure according to the invention may be applied when supporting another cooling unit, such as a condenser for air conditioning in an air conditioning system. The support structure may be configured to support a plurality kinds of cooling units, for example, the radiator and the condenser for air conditioning. Also, for example, when a radiator body is supported by a radiator support in the form of a frame, the support structure according to the invention may be applied to a portion in which the radiator support supports the radiator body, or a portion in which the radiator support is supported by a vehicle body. Thus, the invention may be realized in various embodiments.

In general, the cooling unit is disposed in substantially parallel with a width direction of a vehicle at a front end portion of the vehicle in such a manner that the cooling unit stands substantially vertically (so as to extend in a top-bottom direction). Each of paired side edge portions, which are disposed at right and left side portions of the cooling unit to extend in the top-bottom direction, is supported by the support structure according to the invention. However, the configuration may be such that each of paired side edge portions, which are positioned at a top portion of the cooling unit and a bottom portion of the cooling unit to extend in a right-left direction, may be supported by the support structure according to the invention. Also, each of the four side edge portions including the top and bottom side edge portions and the right and left side edge portions may be supported by the support structure according to the invention. That is, each of the four side edge portions at all the four sides of the cooling unit may be supported by the support structure according to the invention. Only the side edge portion at one of the four sides of the cooling unit may be supported by the support structure according to the invention. Thus, the invention may be realized in various embodiments.

The fragile portion of the second retention portion is a portion whose sectional area sharply decreases, for example. That is, the fragile portion is a portion in which a constriction with a narrow width is provided, or an incision, such as a V-shaped notch, is formed to extend in a plate width direction or a plate thickness direction.

In the second aspect of the invention, the connection portion is provided to protrude upward or downward through the fragile portion, and the second support point is connected to the connection portion. However, the connection portion does not necessarily need to protrude strictly in the top-bottom direction (in the vertical direction). For example, the connection portion may be inclined toward a front or rear side of the vehicle at an angle in a range of -10° to + 10°. In another embodiment of the invention, for example, the second support point may be connected to a connection portion that protrudes toward the rear side of the vehicle. Thus, various embodiments may be made.

The slide mechanism in the fourth aspect of the invention is configured, for example, by forming an elongate hole, which linearly extends in a front-rear direction of the vehicle, in the support bracket, and fastening a fastening bolt or the like to the cooling unit through the elongate hole so that the cooling unit is supported with predetermined support strength corresponding to the fastening force of the fastening bolt, and when the external force equal to or larger than the predetermined value is applied in the direction toward the rear side of the vehicle, the fastening bolt is permitted to slide in the elongate hole toward the rear side of the vehicle against the fastening force of the fastening bolt. The elongate hole may be formed in the cooling unit. A guide rod or the like may be provided instead of the elongate hole, and the cooling unit or the support bracket may be connected to the guide rod or the like with a predetermined fastening force. Thus; various embodiments may be made. The first support point does not necessarily need to be linearly moved strictly toward the rear side of the vehicle. For example, the first support point may be linearly moved in a direction inclined upward or downward, or rightward or leftward at an angle in a range of -10° to + 10°. When realizing the first aspect of the invention, the second support point may be linearly moved in a direction inclined upward or downward, or rightward or leftward at an angle smaller than -10° or larger than + 10°. The second support point may be moved along a trajectory other than a trajectory of a straight line, such as a trajectory of an arc. Thus, various embodiments may be made.

### First embodiment

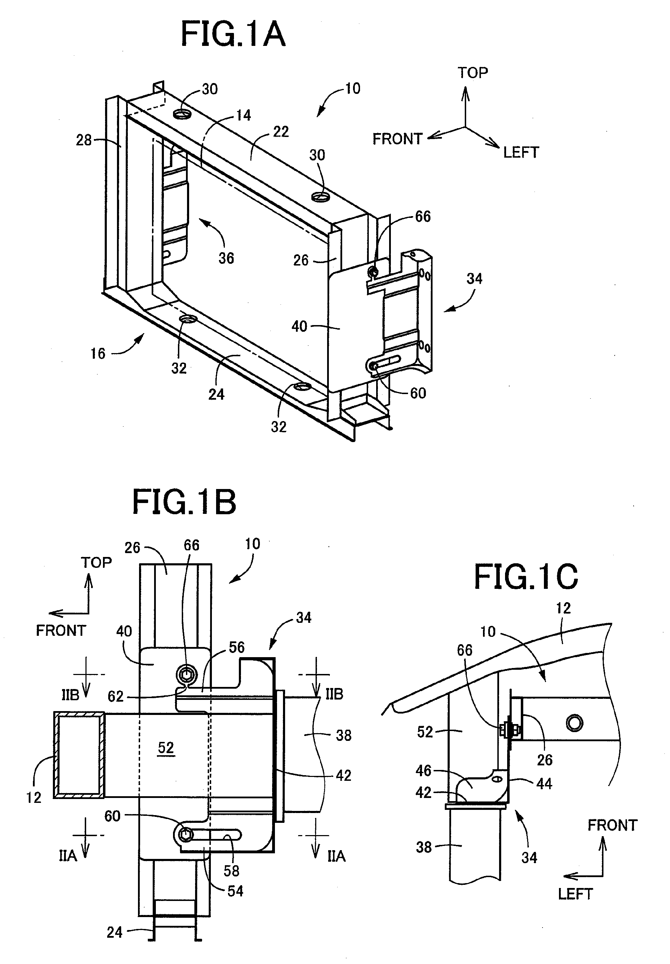

Hereinafter, a first embodiment of the invention will be described in detail with reference to the drawings. FIGS. 1A to 1C are diagrams showing a support structure for a cooling unit for a vehicle according to the first embodiment of the invention. FIG. 1A is a schematic perspective view, FIG. 1B is a side view showing the support structure at a left side of a vehicle, which is seen from the left side of the vehicle, and FIG. 1C is a plan view showing the support structure at the left side of the vehicle, which is seen from a top of the vehicle. A cooling unit 10 in the first embodiment is a radiator that cools a cooling fluid for cooling an engine. The cooling unit 10 includes a rectangular radiator body 14, and a radiator support 16 in the form of a frame, which supports the radiator body 14. The cooling unit 10 is disposed in substantially parallel with the width direction of the vehicle at a position behind a bumper reinforcement 12 disposed at the front side of the vehicle in such a manner that the cooling unit 10 stands substantially vertically (so as to extend in the top-bottom direction).

The radiator support 16 includes an upper radiator support 22 disposed to extend substantially horizontally in the right-left direction of the vehicle; a lower radiator support 24 that is disposed below the upper radiator support 22 so as to extend in substantially parallel with the upper radiator support 22; and paired side radiator supports 26 and 28 that are disposed away from each other in the right-left direction of the vehicle, and that extend in the top-bottom direction (in the substantially vertical direction) from the upper radiator support 22 to the lower radiator support 24 to connect the upper radiator support 22 and the lower radiator support 24. The substantially rectangular frame is constituted by the upper radiator support 22, the lower radiator support 24, and the paired side radiator supports 26 and 28. The radiator body 14 is provided in a substantially rectangular space surrounded by the frame, and the radiator body 14 is attached integrally to the frame so that the radiator body 14 is supported by the frame. Paired retention holes 30 are formed in the upper radiator support 22, and paired retention holes 32 are formed in the lower radiator support 24 in such a manner that the retention holes 30 are away from each other in the right-left direction, and the retention holes 32 are away from each other in the right-left direction. An upper portion and a lower portion of the radiator body 14 are attached to the upper radiator support 22 and the lower radiator support 24, respectively, through elastic bodies, such as rubber, at the retention holes 30 and 32.

The cooling unit 10 is disposed to be connected to front side members 38 disposed at right and left sides of the vehicle body (the front side member 38 at the right side of the vehicle body is not shown) through paired support brackets 34 and 36. The support brackets 34 and 36 correspond to the vehicle body-side fixation portion. The paired support brackets 34 and 36 are symmetrically disposed on both sides of the cooling unit 10 in the width direction of the vehicle. The support brackets 34 and 36 support the paired side edge portions that are disposed at the right and left side portions of the cooling unit 10 to extend in the top-bottom direction. More specifically, the support brackets 34 and 36 support the above-described side radiator supports 26 and 28, respectively. Reinforcement plates 40 are fixed integrally to outer portions of the side radiator supports 26 and 28, respectively. The support brackets 34 and 36 are connected to the reinforcement plates 40. The support structure according to the first embodiment is configured using the support brackets 34 and 36 as main portions of the support structure. The support brackets 34 and 36 are configured to be bilaterally symmetrical to each other. Hereinafter, the support bracket 34 at the left side will be described more specifically.

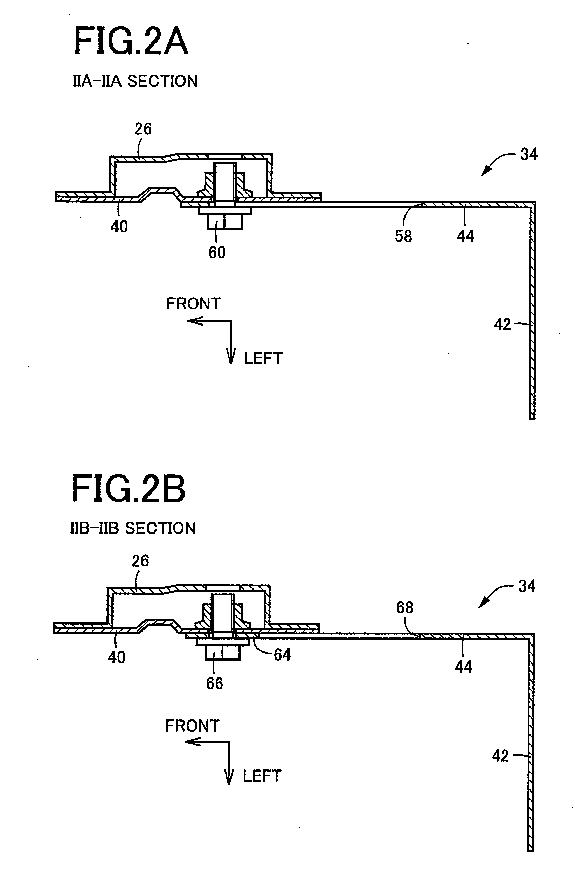

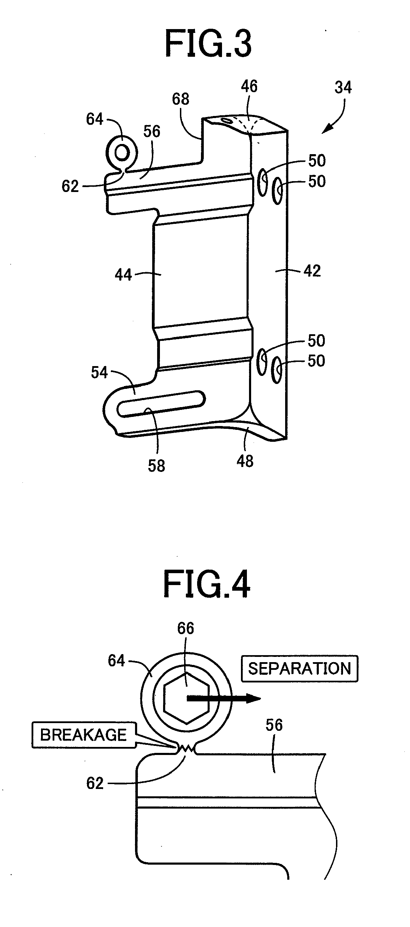

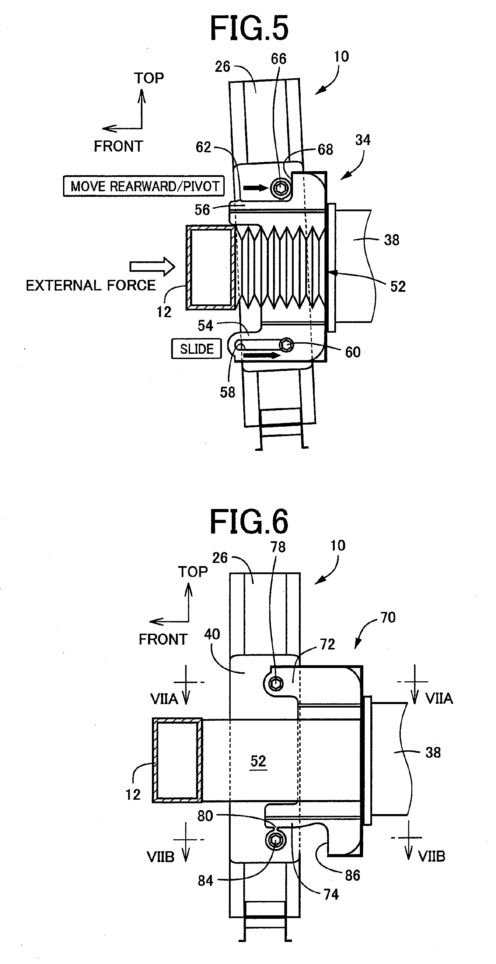

FIGS. 2A and 2B are sectional views showing an enlarged section IIA-IIA and an enlarged section IIB-IIB in FIG. 1B, respectively. FIG. 3 is a perspective view showing only the support bracket 34 at the left side. The support bracket 34 has an L-shaped transverse section in which a horizontal portion bends at a substantially right angle. The support bracket 34 includes a fixation plate portion 42 fixed to the front side member 38, and a support plate portion 44 that supports the above-described side radiator support 26. In addition, connection plate portions 46 and 48 for reinforcement are provided integrally at upper and lower end portions respectively of the fixation plate portion 42 and the support plate portion 44 in such a manner that the connection plate portions 46 and 48 are connected to the fixation plate portion 42, and to the support plate portion 44. A plurality of attachment holes 50 are formed in the fixation plate portion 42. The fixation plate portion 42 is fixed integrally to a front end surface of the front side member 38 using, for example, fixation bolts (not shown). A crash box 52 is connected to the front side member 38 in such a manner that the fixation plate portion 42 is positioned between the crash box 52 and the front side member 38. The bumper reinforcement 12 is attached to a front end of the crash box 52. As shown in FIGS. 1B and 1C, a predetermined space is formed between the bumper reinforcement 12 and the cooling unit 10 in the front-rear direction of the vehicle. For example, when front collision occurs, the crash box 52 is pressed and deformed to have an accordion-folded shape as shown in FIG. 5. Thus, the crash box 52 absorbs impact energy, thereby reducing impact on the vehicle. When the crash box 52 is pressed and deformed in the above-described manner, the bumper reinforcement 12 may interfere with (contact) the cooling unit 10, and the cooling unit 10 may be damaged.

The support plate portion 44 is integrally provided with a first retention portion 54 and a second retention portion 56 that supports a first support point and a second support point, respectively. The first support point and the second support point are set to be away from each other in a longitudinal direction of the side radiator support 26, that is, the top-bottom direction. A first fastening bolt 60 is inserted through an elongate hole 58 formed in the first retention portion 54 at a lower position, and screwed to the reinforcement plate 40 of the side radiator support 26. Thus, the first retention portion 54 supports the side radiator support 26 with predetermined support strength corresponding to the fastening force of the first fastening bolt 60. The elongate hole 58 is formed to extend in a straight line in the front-rear direction of the vehicle, that is, the horizontal direction. In a normal state in which a large external force for pressing and deforming the crash box 52 is not applied to the crash box 52, positional relation between the elongate hole 58 and the first fastening bolt 60 is set so that the first fastening bolt 60 is screwed to the reinforcement plate 40 at a front end portion of the elongate hole 58 (refer to FIG. 1B). In this state, if the crash box 52 is pressed and deformed, the bumper reinforcement 12 contacts the cooling unit 10, and the external force equal to or larger than a predetermined value is applied to the first fastening bolt 60 in a direction toward the rear side of the vehicle at a time of front collision or the like, the first fastening bolt 60 is permitted to slide linearly toward the rear side of the vehicle against the fastening force of the first fastening bolt 60, together with the side radiator support 26 (refer to FIG. 5). A slide mechanism is configured using the elongate hole 58. A portion of the side radiator support 26, to which the first fastening bolt 60 is screwed, corresponds to the first support point. A nut member, to which the first fastening bolt 60 is screwed, is fixed integrally to the reinforcement plate 40 in advance by, for example, resistance welding. FIG. 2A is a transverse sectional view showing a portion including the first support point.

The second retention portion 56 at an upper position includes a connection portion 64 that protrudes upward through a constriction 62 with a narrow width. A second fastening bolt 66 is inserted through a through-hole formed in the connection portion 64, and screwed to the reinforcement plate 40 of the side radiator support 26. Thus, the second retention portion 56 supports the side radiator support 26 with predetermined support strength. The constriction 62 functions as the fragile portion. When the bumper reinforcement 12 contacts the cooling unit 10, and the external force equal to or larger than a predetermined value is applied to the second fastening bolt 66 in the direction toward the rear side of the vehicle at the time of front collision or the like, the constriction 62 is broken, and the second fastening bolt 66 and the connection portion 64 are separated from the second retention portion 56 as shown in FIG. 4. Thus, the second fastening bolt 66 is permitted to move toward the rear side of the vehicle, or to pivot a predetermined distance in a direction of an arc with a center at the first fastening bolt 60, together with the side radiator support 26. The pivoting movement in the direction of the arc with the center at the first fastening bolt 60 is restricted by engagement with an upper end edge of the second retention portion 56. However, the pivoting movement is permitted in accordance with a length by which the connection portion 64 protrudes upward through the constriction 62. Because a force in a compression direction is applied to the constriction 62 due to the load of the cooling unit 10, the cooling unit 10 is appropriately supported with predetermined support strength in spite of existence of the constriction 62. On the other hand, when the external force is applied in the direction toward the rear side of the vehicle, that is, in the direction substantially perpendicular to the direction in which the connection portion 64 protrudes, a force in a shear direction is applied to the constriction 62, and the constriction 62 is broken relatively easily. Thus, while sufficient support strength is ensured, the constriction 62 is reliably broken to permit the cooling unit 10 to move toward the rear side of the vehicle at the time of vehicle collision or the like.

The breaking strength of the constriction 62, that is, for example, the width of the constriction 62 is set so that when the external force is applied in the direction toward the rear side of the vehicle, the constriction 62 is broken to permit the second fastening bolt 66 to move toward the rear side of the vehicle before the first fastening bolt 60 starts to move relative to the elongate hole 58 against the fastening force of the first fastening bolt 60. The support bracket 34 is provided with a stopper portion 68 that engages with the connection portion 64 or a head portion or the like of the second fastening bolt 66, which has been separated from the second retention portion 56 due to breakage of the constriction 62, thereby restricting the second fastening bolt 66 from moving toward the rear side of the vehicle by an amount equal to or larger than a predetermined amount (refer to FIG. 5). A portion of the side radiator support 26, to which the second fastening bolt 66 is screwed, corresponds to the second support point. A nut member, to which the second fastening bolt 66 is screwed, is fixed integrally to the reinforcement plate 40 in advance by, for example, resistance welding. FIG. 2B is a transverse sectional view showing a portion including the second support point.

In the support structure for a cooling unit for a vehicle, when the external force equal to or larger than the predetermined value is applied to the second fastening bolt 66 that is the second support point in the direction toward the rear side of the vehicle, the constriction 62 is broken, and thus, the second fastening bolt 66 is separated from each of the support brackets 34 and 36. Accordingly, the second fastening bolt 66 is permitted to move toward the rear side of the vehicle, and to pivot in the direction of the arc with the center at the first fastening bolt 60 that is the first support point. Therefore, the degree of freedom of movement of the second fastening bolt 66, which is the second support point, is high. Then, when the external force is concentrated on the first fastening bolt 60, and the first fastening bolt 60 is linearly moved toward the rear side of the vehicle while guided by the elongate hole 58, for example, the second fastening bolt 66 is also moved toward the rear side of the vehicle together with the first fastening bolt 60. Thus, the cooling unit 10 is moved in a substantially parallel manner toward the rear side of the vehicle, or the cooling unit 10 is moved toward the rear side of the vehicle while oscillating in such a manner that the second fastening bolt 66 pivots in the direction of the arc with the center at the first fastening bolt 60, depending on the manner in which the external force is applied.

When the degree of freedom of movement of the second support point to which the second fastening bolt 66 is screwed is high, and the first fastening bolt 60 is linearly moved toward the rear side of the vehicle while guided by the elongate hole 58, the second support point (the second fastening bolt 66) can be displaced toward the rear side of the vehicle in various manners according to the manner in which the external force is applied. Therefore, even when an unbalanced load is applied to the cooling unit 10, the cooling unit 10 is not likely to be twisted, and the cooling unit 10 is smoothly moved toward the rear side of the vehicle. Thus, it is possible to appropriately suppress damage to the cooling unit 10 due to contact between the cooling unit 10 and the bumper reinforcement 12.

The second retention portion 56 supports the second fastening bolt 66 through the fragile constriction 62. When the external force equal to or larger than the predetermined value is applied to the second fastening bolt 66, the constriction 62 is broken, and the second fastening bolt 66 and the connection portion 64 are separated from the second retention portion 56. Accordingly, in this state, the cooling unit 10 is supported only by the first retention portion 54 through the first fastening bolt 60. Thus, the cooling unit 10 is moved or caused to pivot toward the rear side of the vehicle more smoothly, without being restricted by the second retention portion 56.

As compared to when the second fastening bolt 66 is slid in the elongate hole against the fastening torque (friction force) of the bolt or the like, the variation in the breaking load at which the constriction 62 is broken is small, and thus, the constriction 62 is constantly broken by a certain external force reliably, and as a result, the second fastening bolt 66 is separated from the second retention portion 56 and the cooling unit 10 is reliably moved toward the rear side of the vehicle.

In the first embodiment, the paired support brackets 34 and 36 are disposed on both sides of the cooling unit 10 in the width direction of the vehicle. Each of the paired side edge portions, which are disposed at the right and left side portions of the cooling unit 10 to extend in the top-bottom direction, that is, each of the side radiator supports 26 and 28 is supported by the first retention portion 54 and the second retention portion 56. Therefore, the cooling unit 10 is stably maintained in a certain posture at a predetermined position. In addition, at the time of front collision or the like, it is possible to permit the cooling unit 10 to move or pivot toward the rear side of the vehicle, thereby appropriately suppressing damage to the cooling unit 10.

The connection portion 64 protrudes upward through the constriction 62, and the second support point is connected to the connection portion 64 through the second fastening bolt 66. Accordingly, the force in the compression direction is applied to the constriction 62 due to the load of the cooling unit 10. Therefore, the cooling unit 10 is appropriately supported with the predetermined support strength in spite of existence of the fragile constriction 62. On the other hand, when the external force is applied in the direction toward the rear side of the vehicle, that is, in the direction substantially perpendicular to the direction in which the connection portion 64 protrudes, the force in the shear direction is applied to the constriction 62, and the constriction 62 is broken relatively easily. Thus, while sufficient support strength is ensured, the constriction 62 is reliably broken to permit the cooling unit 10 to move toward the rear side of the vehicle at the time of vehicle collision or the like.

Also, in the first embodiment, the stopper portion 68 restricts movement of the second fastening bolt 66, which has been separated from the second retention portion 56 due to breakage of the constriction 62, toward the rear side of the vehicle. Therefore, in spite of the separation of the second fastening bolt 66 from the second retention portion 56, the cooling unit 10 is maintained in a predetermined posture, and thus, the cooling unit 10 is caused to move or pivot toward the rear side of the vehicle stably. In addition, it is possible to avoid damage to the cooling unit 10 due to, for example, contact between the cooling unit 10 and the other member in the vicinity of the cooling unit 10.

Also, in the first embodiment, the breaking strength of the constriction 62 is set so that when the external force is applied at the time of vehicle collision, the second fastening bolt 66, which is the second support point, is permitted to move toward the rear side of the vehicle before the first fastening bolt 60, which is the first support point, starts to move. Therefore, the external force is concentrated on a portion of the first retention portion 54, which supports the first fastening bolt 60, due to the breakage of the constriction 62, and thus, the first fastening bolt 60 is moved toward the rear side of the vehicle. Accordingly, the first fastening bolt 60 is linearly moved only toward the rear side of the vehicle by the elongate hole 58 while the second fastening bolt 66 is permitted to move or pivot. Thus, the cooling unit 10 is moved in the substantially parallel manner toward the rear side of the vehicle, or the cooling unit 10 is moved toward the rear side of the vehicle while oscillating in such a manner that the second fastening bolt 66 pivots in the direction of the arc with the center at the first fastening bolt 60, depending on the manner in which the external force is applied. Thus, the cooling unit 10 is moved toward the rear side of the vehicle more smoothly.

### Second embodiment

Next, a second embodiment of the invention will be described. In the second embodiment, portions, which are substantially the same as those in the first embodiment, will be denoted by the same reference numerals, and detailed description thereof will be omitted.

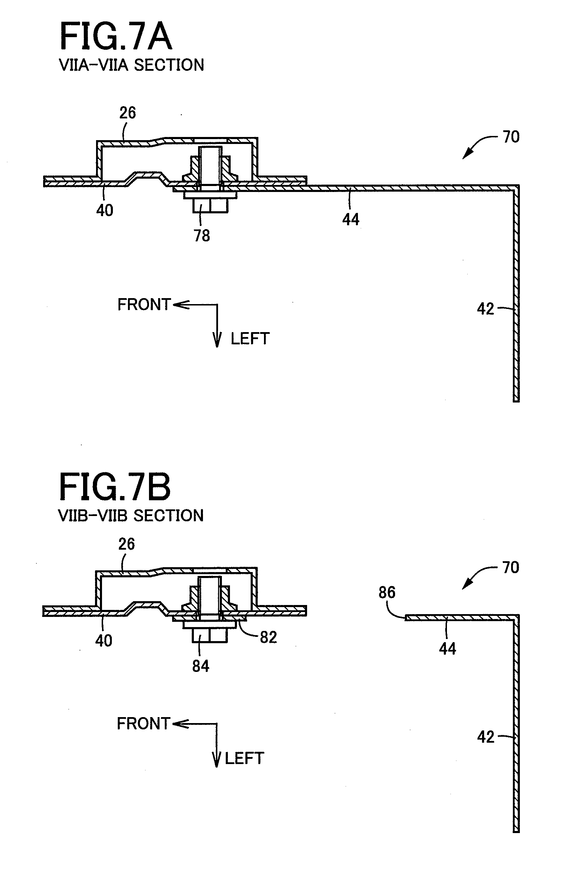

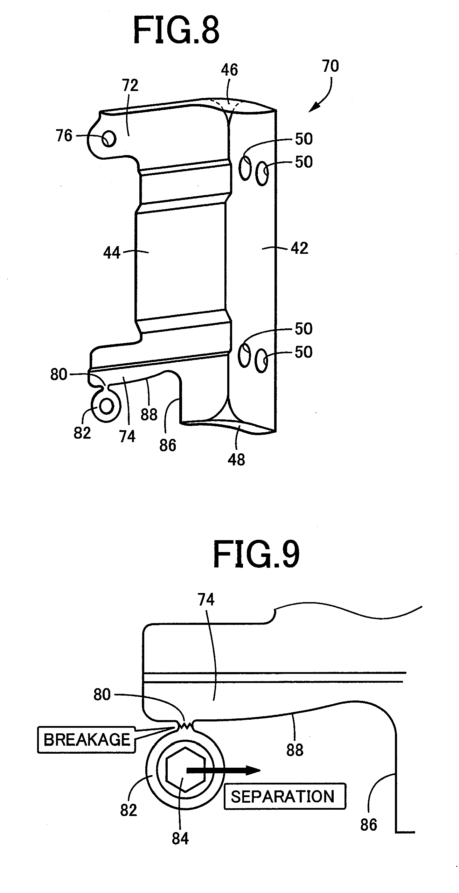

FIG. 6 is a diagram, which is a side view corresponding to FIG. 1B, for showing a support structure using a support bracket 70 on the left side. FIGS. 7A and 7B are sectional views showing an enlarged section VIIA-VIIA and an enlarged section VIIB-VIIB in FIG. 6, respectively. FIG. 8 is a perspective view showing only the support bracket 70. The support bracket 70 is integrally provided with the fixation plate portion 42, the support plate portion 44, and the connection plate portions 46 and 48, as well as the support bracket 34. The fixation plate portion 42 is fixed integrally to the front end surface of the front side member 38, and the support plate portion 44 supports the side radiator support 26. The support plate portion 44 is integrally provided with a first retention portion 72 and a second retention portion 74 that support a first support point and a second support point, respectively. The first support point and the second support point are set to be away from each other in a longitudinal direction of the side radiator support 26, that is, the top-bottom direction. A first fastening bolt 78 is inserted through a fastening hole 76 formed in the first retention portion 72 at an upper position, and screwed to the reinforcement plate 40 of the side radiator support 26. Thus, the first retention portion 72 supports the side radiator support 26 with predetermined support strength. The fastening hole 76 is large enough to allow the first fastening bolt 78 to pass through the fastening hole 76. The first fastening bolt 78 is positioned at a certain position determined by the fastening hole 76. However, when a predetermined external force is applied, the cooling unit 10 is permitted to pivot around the first fastening bolt 78. A portion of the side radiator support 26, to which the first fastening bolt 78 is screwed, corresponds to the first support point. A nut member, to which the first fastening bolt 78 is screwed, is fixed integrally to the reinforcement plate 40 in advance by, for example, resistance welding. FIG. 7A is a transverse sectional view showing a portion including the first support point.

The second retention portion 74 at a lower position includes a connection portion 82 that protrudes downward through a constriction 80 with a narrow width. A second fastening bolt 84 is inserted through a through-hole formed in the connection portion 82, and screwed to the reinforcement plate 40 of the side radiator support 26. Thus, the second retention portion 74 supports the side radiator support 26 with predetermined support strength. The constriction 80 functions as the fragile portion, as well as the constriction 62. When the external force equal to or larger than a predetermined value is applied to the second fastening bolt 84 in the direction toward the rear side of the vehicle, the constriction 80 is broken, and the second fastening bolt 84 and the connection portion 82 are separated from the second retention portion 74 as shown in FIG. 9. Thus, the second fastening bolt 84 is permitted to pivot toward the rear side of the vehicle along an arc with a center at the first fastening bolt 78 that is the first support point, together with the side radiator support 26. Because a force in a tensile direction is applied to the constriction 80 due to the load of the cooling unit 10, the cooling unit 10 is appropriately supported with predetermined support strength in spite of existence of the constriction 80. On the other hand, when the external force is applied in the direction toward the rear side of the vehicle, that is, in the direction substantially perpendicular to the direction in which the connection portion 82 protrudes, a force in a shear direction is applied to the constriction 80, and the constriction 80 is broken relatively easily. Thus, while sufficient support strength is ensured, the constriction 80 is reliably broken to permit the cooling unit 10 to move toward the rear side of the vehicle at the time of vehicle collision or the like.

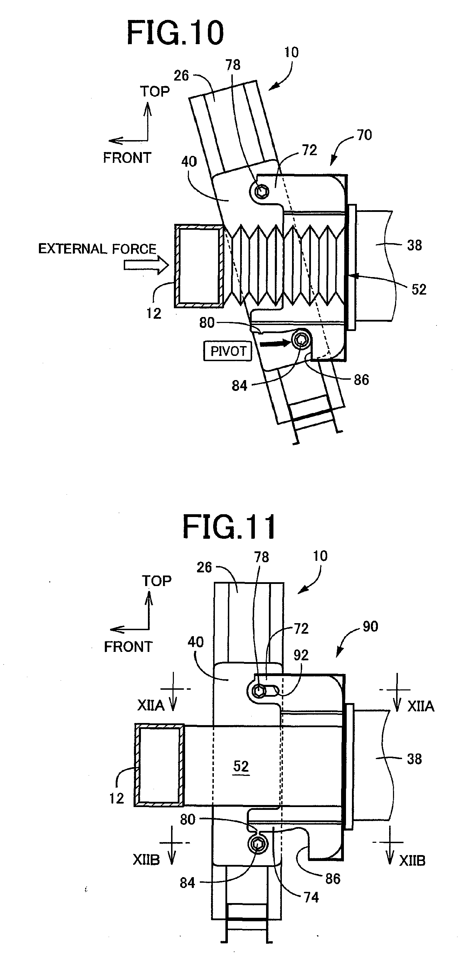

The support bracket 70 is provided with a stopper portion 86 that engages with the connection portion 82 or a head portion or the like of the second fastening bolt 84, which has been separated from the second retention portion 74 due to the breakage of the constriction 80, thereby restricting the pivoting movement of the second fastening bolt 84 toward the rear side of the vehicle (refer to FIG. 10). A lower end edge 88 of the second retention portion 74 has a shape of an arc with a center at the first fastening bolt 78. Thus, the connection portion 82 and the second fastening bolt 84, which have been separated from the second retention portion 74, are permitted to pivot toward the rear side of the vehicle along the arc with the center at the first fastening bolt 78, by a larger amount than in the first embodiment (refer to FIG. 8). A portion of the side radiator support 26, to which the second fastening bolt 84 is screwed, corresponds to the second support point. A nut member, to which the second fastening bolt 84 is screwed, is fixed integrally to the reinforcement plate 40 in advance by, for example, resistance welding. FIG. 7B is a transverse sectional view showing a portion including the second support point.

In the support structure for a cooling unit for a vehicle, when the external force equal to or larger than the predetermined value is applied to the second fastening bolt 84, which is the second support point, in the direction toward the rear side of the vehicle, the constriction 80 is broken, and thus, the second fastening bolt 84 is separated from the support bracket 70. Accordingly, the second fastening bolt 84 is permitted to move toward the rear side of the vehicle, and to pivot in the direction of the arc with the center at the first fastening bolt 78 that is the first support point. Because the degree of freedom of movement of the second fastening bolt 84, which is the second support point, is high, and the second fastening bolt 84 is permitted to pivot toward the rear side of the vehicle along the arc with the center at the first fastening bolt 78, the cooling unit 10 is caused to pivot stably in such a manner that a lower portion of the cooling unit 10 pivots toward the rear side of the vehicle around the first fastening bolt 78 without being, for example, twisted, as shown in FIG. 10. Thus, it is possible to appropriately suppress damage to the cooling unit 10 due to contact between the cooling unit 10 and the bumper reinforcement 12.

In the second embodiment, the second retention portion 74 supports the second fastening bolt 84 through the constriction 80. When the external force equal to or larger than the predetermined value is applied to the second fastening bolt 84, the constriction 80 is broken, and the second fastening bolt 84 and the connection portion 82 are separated from the second retention portion 74. Therefore, in this state, the cooling unit 10 is supported only by the first retention portion 72 through the first fastening bolt 78. Thus, the cooling unit 10 is caused to pivot toward the rear side of the vehicle more smoothly without being restricted by the second retention portion 74.

The connection portion 82 protrudes downward through the constriction 80, and the second support point is connected to the connection portion 82 through the second fastening bolt 84. Therefore, the force in the tensile direction is applied to the constriction 80 due to the load of the cooling unit 10, and thus, the cooling unit 10 is appropriately supported with the predetermined support strength in spite of the existence of the fragile constriction 80. On the other hand, when the external force is applied in the direction toward the rear side of the vehicle, that is, the direction substantially perpendicular to the direction in which the connection portion 82 protrudes, the force in the shear direction is applied to the constriction 80, and the constriction 80 is broken relatively easily. Thus, while sufficient support strength is ensured, the constriction 80 is reliably broken to permit the cooling unit 10 to move toward the rear side of the vehicle at the time of vehicle collision or the like.

Also, in the second embodiment, the stopper portion 86 restricts the pivoting movement of the second fastening bolt 84, which has been separated from the second retention portion 74 due to breakage of the constriction 80, toward the rear side of the vehicle. Therefore, in spite of the separation of the second fastening bolt 84 from the second retention portion 74, the cooling unit 10 is maintained in a predetermined posture. Thus, it is possible to avoid damage to the cooling unit 10 due to, for example, contact between the cooling unit 10 and the other member in the vicinity of the cooling unit 10.

A support bracket is provided at the right portion of the cooling unit 10 in such a manner that the support bracket is symmetrical with the support bracket 70 in the width direction of the vehicle. The paired support brackets support the paired side edge portions, which are disposed at the right and left side portions of the cooling unit 10 to extend in the top-bottom direction, that is, the side radiator supports 26 and 28, respectively, and each support bracket supports the corresponding side radiator support at two points, as in the first embodiment. Thus, the cooling unit 10 is stably maintained in a certain posture at a predetermined position. In addition, at the time of front collision or the like, it is possible to permit the cooling unit 10 to pivot toward the rear side of the vehicle, thereby appropriately suppressing damage to the cooling unit 10.

### Third embodiment

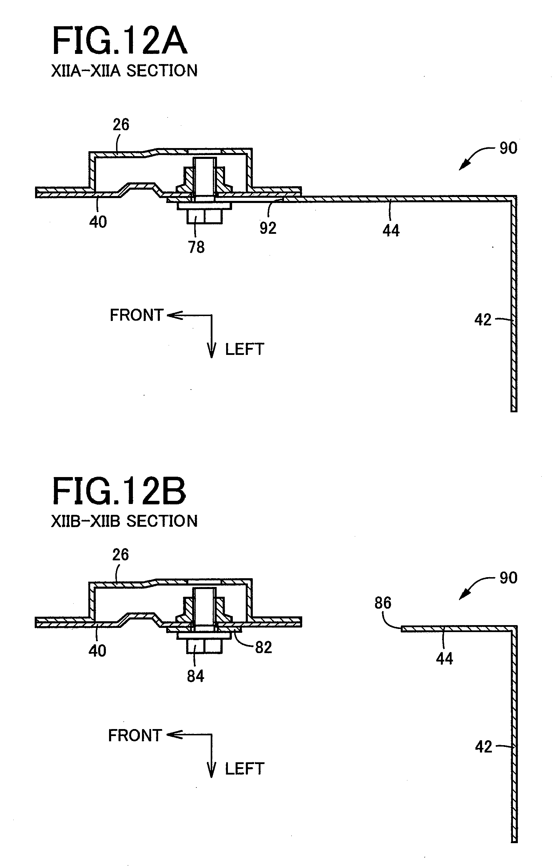

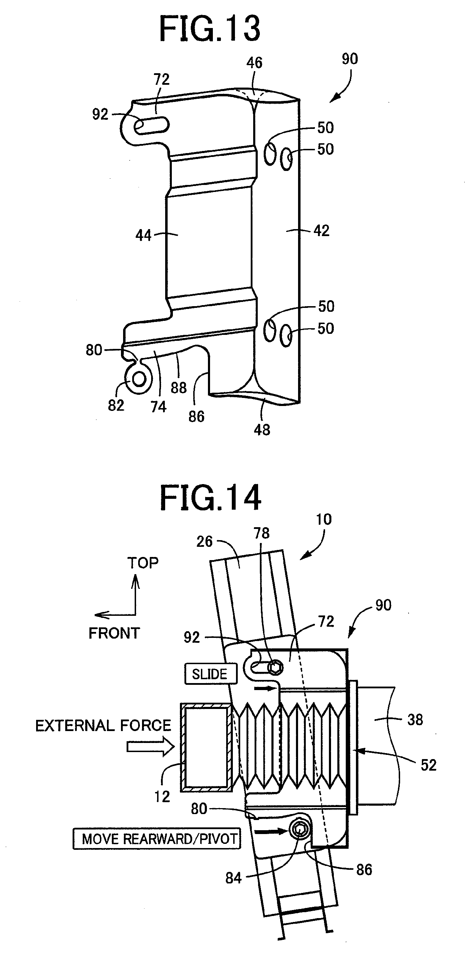

FIGS. 11 to 14 show a support bracket 90 in a third embodiment. When the support bracket 90 in the third embodiment is compared with the support bracket 70 in the second embodiment, the support bracket 90 is different from the support bracket 70 in that an elongate hole 92 is formed in the first retention portion 72 to linearly extend substantially horizontally in the front-rear direction of the vehicle, and the first fastening bolt 78 can be moved toward the rear side of the vehicle along the elongate hole 92. FIG. 11 is a side view corresponding to FIG. 6. FIGS. 12A and 12B are sectional views showing an enlarged XIIA-XIIA section and an enlarged XIIB-XIIB section in FIG. 11, respectively. FIG. 13 is a perspective view showing only the support bracket 90. FIG. 14 is a side view showing a state in which the cooling unit 10 has been displaced toward the rear side of the vehicle.

The position of the elongate hole 92 is set so that the first fastening bolt 78 is screwed to the reinforcement plate 40 at a front end portion of the elongate hole 92, in a normal state shown in FIG. 11. When the bumper reinforcement 12 contacts the cooling unit 10, and the external force equal to or larger than a predetermined value is applied to the first fastening bolt 78 in the direction toward the rear side of the vehicle at the time of front collision or the like, the first fastening bolt 78 is permitted to linearly slide toward the rear side of the vehicle against the fastening force of the first fastening bolt 78, together with the side radiator support 26 (refer to FIG. 14). The fastening force of the first fastening bolt 78 is larger than the breaking strength of the constriction 80. When the external force is applied in the direction toward the rear side of the vehicle, the constriction 80 is broken, and then, the first fastening bolt 78 starts to move toward the rear side of the vehicle against the fastening force of the first fastening bolt 78 while guided by the elongate hole 92. The slide mechanism is configured using the elongate hole 92.

In the third embodiment, the first fastening bolt 78, which is the first support point, can be moved toward the rear side of the vehicle by the elongate hole 92, as in the first embodiment. Therefore, when the external force equal to or larger than the predetermined value is applied in the direction toward the rear side of the vehicle, first, the constriction 80 is broken, and thus, the second fastening bolt 84 is permitted to move toward the rear side of the vehicle, and to pivot in the direction of the arc with the center at the first fastening bolt 78 that is the first support point. Then, when the external force is concentrated on the first fastening bolt 78, and the first fastening bolt 78 is linearly moved toward the rear side of the vehicle while guided by the elongate hole 92, for example, the second fastening bolt 84 is also moved toward the rear side of the vehicle together with the first fastening bolt 78. Thus, the cooling unit 10 is moved in the substantially parallel manner toward the rear side of the vehicle, or the cooling unit 10 is moved toward the rear side of the vehicle while oscillating in such a manner that the second fastening bolt 84 pivots in the direction of the arc with the center at the first fastening bolt 78, depending on the manner in which the external force is applied.

That is, it is possible to obtain substantially the same advantageous effects as those obtained in the first embodiment, although the positional relation between the first support point (the first fastening bolt 78) and the second support point (the second fastening bolt 84) in the top-bottom direction is reversed, as compared to the first embodiment. Particularly, in the third embodiment, because the lower end edge 88 of the second retention portion 74 has the arc shape, the second fastening bolt 84 can pivot in the direction of the arc with the center at the first fastening bolt 78 by a large amount, and thus, the degree of freedom of movement of the second fastening bolt 84 is high. Thus, the cooling unit 10 is stably moved toward the rear side of the vehicle without being twisted, for example. Accordingly, it is possible to suppress damage to the cooling unit 10 due to contact between the cooling unit 10 and the bumper reinforcement 12.

Although embodiments of the invention have been described in detail with reference to drawings, these embodiments are merely examples, and the invention can be implemented in various forms obtained by altering or modifying the embodiments based on the knowledge of those skilled in the art.
It is provided a support structure for a cooling unit (10) for a vehicle, in which in one straight side edge portion of a rectangular cooling unit, a first support point (60, 78) and a second support point (66, 84), which are set to be away from each other in a longitudinal direction of the one side edge portion, are supported by a first retention portion (54, 72) and a second retention portion (56, 74), respectively, the first retention portion and the second retention portion being provided in a single support bracket (34, 36, 70, 90) fixed integrally to a vehicle body, the second retention portion (56, 74) supporting the second support point (66, 84) through a fragile portion (62, 80) that is broken to permit the second support point to be separated from the second retention portion when an external force equal to or larger than a predetermined value is applied to the second support point in a direction toward a rear side of a vehicle; and when the fragile portion (56, 74) is broken, the second support point being permitted to move toward the rear side of the vehicle, and to pivot in a direction of an arc with a center at the first support point.

## Claims

1. A support structure for a cooling unit (10) for a vehicle, in which in one straight side edge portion of a rectangular cooling unit, a first support point (60, 78) and a second support point (66, 84), which are set to be away from each other in a longitudinal direction of the one side edge portion, are supported by a first retention portion (54, 72) and a second retention portion (56, 74), respectively,
the first retention portion and the second retention portion being provided in a single support bracket (34, 36, 70, 90) fixed integrally to a vehicle body,
the second retention portion (56, 74) supporting the second support point (66, 84) through a fragile portion (62, 80) that is broken to permit the second support point to be separated from the second retention portion when an external force equal to or larger than a predetermined value is applied to the second support point in a direction toward a rear side of a vehicle; and
when the fragile portion (56, 74) is broken, the second support point being permitted to move toward the rear side of the vehicle, and to pivot in a direction of an arc with a center at the first support point.

2. The support structure for a cooling unit (10) for a vehicle according to claim 1,
wherein
the paired support brackets (34, 36, 70, 90) are provided on both sides of the cooling unit in a width direction of the vehicle, and each of the paired support brackets supports a corresponding one of the paired side edge portions that are disposed at right and left side portions of the cooling unit to extend in a top-bottom direction, through the first retention portion (54, 72) and the second retention portion (56, 74); and
the second retention portion (56, 74) includes a connection portion (64, 82) that protrudes upward or downward through the fragile portion (56, 74), and that is connected to the second support point (66, 84) to support the second support point.

3. The support structure for a cooling unit (10) for a vehicle according to claim 1 or 2, wherein
the support bracket (34, 36, 70, 90) includes a stopper portion (68, 86) that engages with the second support point (66, 84) that has been separated from the second retention portion (56, 74) due to breakage of the fragile portion (56, 74), thereby restricting the second support point from moving toward the rear side of the vehicle by an amount equal to or larger than a predetermined amount.

4. The support structure for a cooling unit (10) for a vehicle according to any one of claims 1 to 3, wherein
the first retention portion (54, 72) includes a slide mechanism (58, 92) that permits the first support point (60, 78) to linearly move only toward the rear side of the vehicle when the external force equal to or larger than a predetermined value is applied to the first support point in the direction toward the rear side of the vehicle.

5. The support structure for a cooling unit (10) for a vehicle according to claim 4,
wherein
in the second retention portion (56, 74), breaking strength of the fragile portion (56, 74) is set so that when the external force is applied in the direction toward the rear side of the vehicle, the second support point (66, 84) is permitted to move toward the rear side of the vehicle before the first support point (60, 78) supported by the first retention portion (54, 72) starts to move.

6. The support structure for a cooling unit (10) for a vehicle according to any one of claims 1 to 3, wherein
the first support point (60, 78) is supported by the first retention portion (54, 72) so that the first support point is unable to move toward the rear side of the vehicle; and
when the external force equal to or larger than the predetermined value is applied and the fragile portion (56, 74) is broken, the second support point (66, 84) is caused to pivot toward the rear side of the vehicle along the arc with the center at the first support point.
